# EUROPEAN PATENT APPLICATION

(11) **EP 3 839 456 A1**
(43) Date of publication of application: **23.06.2021**
(21) Application number: 19217288.0
(22) Date of filing: 18.12.2019
(51) Int. Cl.: G01K 1/14, G01K 7/02, G01K 7/16, G01K 1/18

(54) **HOUSING ELEMENT FOR SECURING AT LEAST ONE TEMPERATURE SENSOR ON A MEASURING OBJECT**

(71) Applicant: TE Connectivity Germany GmbH, 64625 Bensheim (DE)
(72) Inventor: Gorski, Katharina Margarethe, 67435 Neustadt (DE); Wiechert, Sebastian, 67059 Ludwigshafen (DE)
(74) Representative: Grünecker Patent- und Rechtsanwälte PartG mbB

(57) **Abstract**

The invention relates to a housing element (3) for securing at least one temperature sensor (5) on a measuring object (5), in particular a part of an electric drive. The invention further relates to an arrangement (1) comprising such housing element (3), to a setup (33) for manufacturing such a housing element (3) and to a method for manufacturing such a housing element (3). In order to facilitate manufacturing of a housing element (3) and to improve the fixation and heat transfer properties, it is intended that the housing element (3) is provided with at least one sensor cavity (23) for housing the temperature sensor (5) and at least one insertion channel (9) for receiving a measuring object (11) at least in parts, wherein the housing element (3) comprises a filling (19) in which the at least one sensor cavity (23) and the at least one insertion channel (9) are formed and a sheath (17) that surrounds the filling (19) at least in parts.

## Description

The invention relates to a housing element for securing at least one temperature sensor on a measuring object, in particular a part of an electric drive.

The invention further relates to an arrangement comprising a housing element, a set up for manufacturing a housing element, and a method for manufacturing the housing element according to the invention.

In the operation of a temperature sensor, it is desired to keep the sensor in close physical contact with the measuring object. This contact should not be impaired by vibrations or other disturbances. When the position of a temperature sensor and/or the heat transfer between the temperature sensor and the measured object is impaired, the measuring object may overheat without being noticed. In the worst case, failure of the object, e.g. the above mentioned electric drive, may occur.

The invention intends to provide a housing element that allows for a stable physical contact between the temperature sensor and the measuring object.

This object is achieved for the housing element mentioned above in that the housing element is provided with at least one sensor cavity for housing the temperature sensor and at least one insertion channel for receiving the measuring object at least in parts, wherein the housing element comprises a filling, in which the at least one sensor cavity and the at least one insertion channel are formed, and a sheath that surrounds the filling at least in parts. Preferably, the housing element consists of a filling and a sheath.

The housing element according to the invention, is beneficial because both the temperature sensor and the measuring object may be received in their corresponding cavity or channel. The filling may then transfer heat from the measuring object to the temperature sensor. The sheath may facilitate the manufacturing process of a housing element according to the invention in that it may confine the filling, in particular when the filling is in a state of viscosity during manufacturing. It may also pressurize the filling in order to make the filling take in a required shape. Another benefit of the inventive housing element is that the housing element may be manufactured with the insertion channel for the measuring object having an inner diameter that is basically identical to an outer diameter of the measuring object. In other words, the insertion channel may be shaped complementary to the measuring object such that the measuring object may easily be inserted into the insertion channel. By that, the housing element may, with the temperature sensor housed in its corresponding sensor cavity, be fixated on the measuring object in a simple manner.

The housing element may serve as a securing element for the temperature sensor. Preferably, the housing element is adapted for housing exactly one temperature sensor and is provided with exactly one insertion channel for receiving the measuring object. The part of the measuring object that can be inserted in the insertion channel may be a temperature lance or another element that is capable of transferring heat from a heat source of the measuring object to the housing element. By way of example, the measuring object may be provided with a temperature lance that can be inserted into the insertion channel. The insertion channel is preferably formed as a shaft, tunnel or a blind hole, having a constant inner diameter and being closed at one end. In the alternative, the insertion channel may have a non-constant inner diameter and/or may be formed as a through-hole.

The system comprising the filling and the sheath may also be regarded as a multitude of layers, the filling forming an inner layer that may be in contact with temperature housing and the measuring object and the sheath forming an outer layer that is on top of the inner layer. The invention does not exclude the presence of additional layers that are arranged between the filling and the sheath, on the outside of the sheath and/or surrounding the sensor cavity and/or the insertion channel.

The filling material may be chosen and/or designed with specific thermal conductivities depending on individual applications.

In the following, further improvements of the invention are described. The additional improvements may be combined independently of each other, depending on whether a particular advantage of a particular improvement is needed in a specific application.

According to a first advantageous improvement, the filling may form a material bridge between the at least one sensor cavity and the at least one insertion channel. Thereby, heat may directly be transferred from the measuring object to the temperature sensor, when both are inserted in the housing element.

In order to securely confine the filling and to improve the stability of the housing element, the sheath preferably extends continuously along a circumferential direction of the housing element. The housing element may have the overall shape of a cylinder, but this is not mandatory.

The filling is preferably made from a fluoropolymer material, in particular Perfluoroalkoxy alkanes (PFA). A fluoropolymer material is not only beneficial due to its resistance against harsh environments, but also due to its non-sticking properties. Using a non-sticking material facilitates removal of a placeholder that may be arranged in the insertion channel during manufacturing and also insertion of the measuring object later on. Finally, using a fluoropolymer material is beneficial because of its dielectric properties, in particular when the housing element is used in high voltage applications.

In order to facilitate manufacturing of the housing element, the sheath may be made from a heat-shrinkable material. Using a heat-shrinkable material may simplify the manufacturing process because the heat shrinkable sheath may compress the filling in order to shape the filling around an inserted temperature sensor and also around a measuring object or a placeholder for the measuring object.

The sheath is preferably made from a fluoropolymer material, more preferably Polytetrafluorethylen (PTFE), for the same reasons as the filling being preferably made of fluoropolymer material.

According to another improvement of the housing element, the at least one sensor cavity and/or the at least one insertion channel may have an overall longitudinal, in particular cylindrical, shape. The longitudinal shape for the sensor cavity may be useful when the temperature sensor itself has an overall longitudinal shape. For the insertion channel, a longitudinal shape is beneficial for facilitating the insertion of a part of the measuring object, in particular a temperature lance and for removing a placeholder for the measuring object during manufacturing.

The at least one sensor cavity and the at least one insertion channel preferably open up to opposite sides of the housing element. Thereby, the cable routing for the temperature sensor may be improved because cables may be guided away from the measuring object, without colliding with said object.

According to another improvement of the housing element, at least one additional element may be embedded in the filling. The additional element may, for example, be used for further fixating the housing element.

The arrangement according to the invention may comprise at least one temperature sensor housed in the at least one sensor cavity. Preferably, the temperature sensor is embedded and/or cast-in the filling for proper fixation of the sensor and for improving the heat transfer between the filling and the sensor. The at least one sensor cavity is consequently preferably formed complementary to the at least one temperature sensor.

The arrangement may further comprise at least one placeholder for simulating the measuring object during manufacturing, wherein the at least one insertion channel is formed complementarily to the placeholder, at least in parts. The placeholder may be the part of the measuring object that is inserted either during manufacturing or after manufacturing. However, preferably, a dummy object is used during manufacturing that is simply provided with a similar outer shape as the actual measuring object. The placeholder is preferably provided with a longitudinal shape in order to be able to form the insertion channel for the measuring object.

The setup according to the invention may comprise at least one heating arrangement for heating at least the filling of the housing element and at least one placeholder for forming the at least one insertion channel. Heating at least the filling of the housing element may result in melting the filling. Preferably, the sheath is made from a heat shrinkable material. Consequently, heating the housing element will melt the filling and shrink the sheath, thereby forming a tight fit around the temperature sensor and around the placeholder for the measuring object. The heating arrangement may comprise a heat gun or any other appropriate heater.

According to the inventive method, the housing element is shaped around at least one temperature sensor and around at least one placeholder for the measuring object. Preferably, the filling contains cavities or channels for inserting the temperature sensor and the placeholder prior to shaping. These cavities or channels may have inner diameters that are larger than that of the temperature sensor and the placeholder in order to facilitate the insertion of these elements prior to shaping.

The at least one placeholder is preferably removed after shaping. If the actual measuring object is used as a placeholder, the measuring object may remain in the housing element.

Preferably, the at least one placeholder is reused for manufacturing at least one further housing element.

In the following, the invention and its improvements are described in greater detail using exemplary embodiments and with reference to the drawings. As described above, the various features shown in the embodiments may be used independently of each other in specific applications.

In the following figures, elements having the same function and/or the same structure will be referenced by the same reference signs.

In the drawings:
- Fig. 1: shows a first embodiment of an arrangement according to the invention which is provided with a housing element according to the invention and a temperature sensor;
- Fig. 2: shows a simple sketch of the arrangement prior to shaping; and
- Fig. 3: shows a simple sketch of the arrangement after shaping.

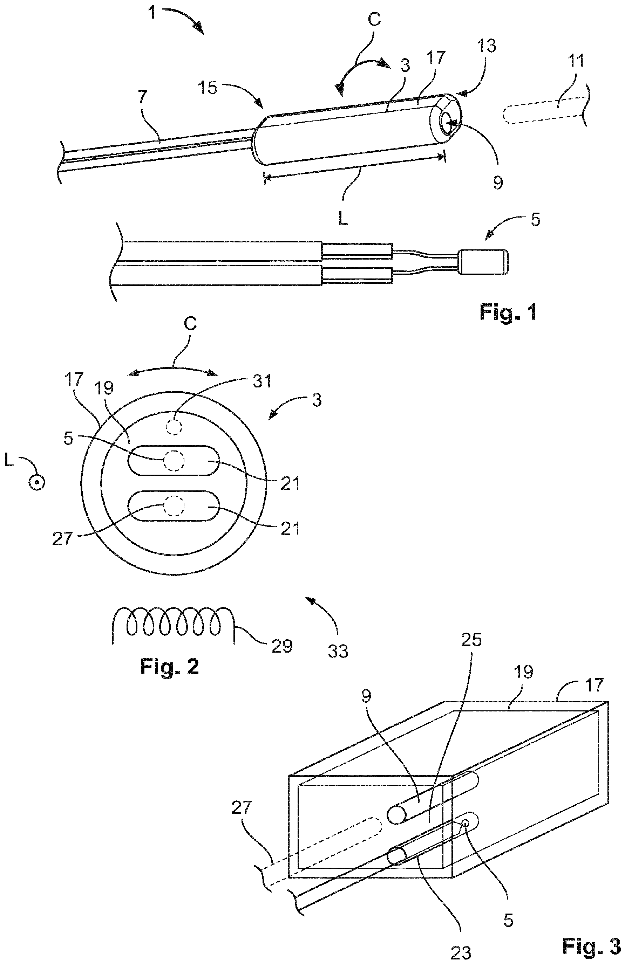

Fig. 1 shows an arrangement 1 that comprises a housing element 3 and a temperature sensor 5. The temperature sensor 5 without the housing element 3 is also shown below the arrangement 1 in Fig. 1.

The temperature sensor 5 may be any appropriate temperature sensor, for example a NTC-sensor (Negative Temperature Coefficient) or another resistive element, such as a Platinum sensor (e.g. Pt100 or Pt1000) or a thermocouple utilizing the thermoelectric effect.

The housing element 3 comprises an overall longitudinal shape and extends along a longitudinal direction L. The temperature sensor 5 is embedded in the housing element, in particular in a sensor cavity (not shown in Fig. 1).

Electric conductors 7 extend basically parallel with the longitudinal direction away from the housing element 3 in order to establish an electrical contact with the temperature sensor 5.

The housing element 3 is provided with an insertion channel 9 for receiving a measuring object 11 at least in parts. The measuring object 11 is only indicated in Fig. 1. Preferably, the measuring object 11 is a part of an electric drive. However, the housing element according to the invention may also be used for other purposes. The measuring object 11 may in particular be a temperature lance that is adapted for transferring heat from a heat source of the object to the temperature sensor 5 inside the housing element 3.

The insertion channel 9 preferably has an overall longitudinal, in particular cylindrical, shape. The insertion channel 9 opens up to an object end 13 of the housing element 3, whereas the temperature sensor 5 is accessible via its electric conductors 7 from a sensor end 15. The object end 13 and the sensor end 15 are arranged opposite each other along the longitudinal direction L.

The housing element 3 is composed of a filling (not shown yet) and a sheath 17 that surrounds the filling at least in parts. At least the sensor cavity and the insertion channel 9 are accessible through the sheath 17.

The sheath 17 preferably surrounds the filling along a circumferential direction C, which extends around the longitudinal direction L. More preferably, the sheath 17 extends continuously along the circumferential direction C. The sheath 17 may have an overall tube shape.

The arrangement 1 can be manufactured according to customer requirements, in particular with respect to the insertion channel 9. Preferably, the insertion channel 9 is shaped complementary to the measuring object 11 for which the housing element 3 is intended to be used. At a customer's site, the arrangement 1 can be securely connected to the measuring object 11 by simply plugging the object 11 into the insertion channel 9.

In the following, further details of the housing element 3 and of manufacturing the same are described with respect to Fig. 2 and 3. Thereby, Fig. 2 shows the material for the housing element 3 prior shaping and Fig. 3 after shaping. Fig. 2 shows a cross-sectional view in a cross section perpendicular to the longitudinal direction.

The housing element 3 is composed of a filling 19 and a sheath 17. Preferably, the sheath 17 is in direct contact with the filling 19, in particular after shaping the housing element 3. Prior to shaping, two cavities 21 may be present in the filling 19 which will later be shaped to form the insertion channel 9 and the sensor cavity 23 for housing the temperature sensor 5.

In the shaped state, the filling 19 preferably forms a material bridge 25 between the insertion channel 9 and the sensor cavity 23. When the temperature sensor 5 and the measuring object 11 are arranged in the housing element 3 with a tight fit in their corresponding cavities, the material bridge 25 is intended to transfer heat from the measuring object 11 to the temperature sensor 5.

The filling 19 is preferably made from a fluoropolymer material, for example Perfluoroalkoxy alkanes (PFA). This material may be helpful for removing a placeholder 27 after shaping the housing element 3 due to its non-sticking properties. A placeholder 27 is indicated by the dashed line in Fig. 3.

Also the sheath 17 is preferably made from a fluoropolymer material, for example Polytetrafluoroethylene (PTFE). The sheath 17 may be made from a heat shrinkable material. Most preferably, the sheath is made from a heat shrinkable fluoropolymer material.

For manufacturing the arrangement 1, a temperature sensor 5 may be placed inside one of the cavities 21 and a placeholder 27 may be arranged in the other cavity 21.

The placeholder 27 is preferably provided with the same diameter as the measurement object 11 for which the housing element 3 is intended to be used. The material of the filling 19 and the sheath 17 may then be heated using a heating arrangement 29, which is only indicated by a hot wire 29 in Fig. 2. The heating arrangement 29 and the placeholder 11 may together form a setup 33 according to the invention.

The heating arrangement 29 may heat the material of the housing element 3 such that the filling 19 increases its viscosity or, in other words, melts.

At the same time, if the sheath 17 is made from a heat shrinkable material, the sheath 17 shrinks and applies pressure on the material of the filling 19 towards the temperature sensor 5 and the placeholder 27.

Thereby, the sensor cavity 23 is shaped complementary to the temperature sensor 5 and the insertion channel 9 is formed complementary to the placeholder 27.

The placeholder 27 may, after shaping the insertion channel 9, be removed from the housing element 3 by simply pulling it out of the insertion channel 9.

The placeholder 27 may then be used for shaping the insertion channel 9 of another housing element 3 at a later stage.

The housing element 3 with the temperature sensor 5 in the sensor cavity 23 may be installed on the measuring object 11 by inserting a part of the measuring object 11 into the insertion channel 9. Since the insertion channel 9 is formed complementary to the measuring object 11, the measuring object 11 will fit tightly into the insertion channel 9 with a direct contact to the filling 19 and thereby to the material bridge 25.

At the same time, due to the complementary shapes of the insertion channel 9 and the measuring object 11, the housing element 3 is securely fixated on the measuring object 11.

If this fixation should not be sufficient, additional elements 31 such as fixation elements may be embedded in the filling 19. An additional element 31 may be arranged in the filling 19 prior to shaping and then remain in the filling 19 after manufacturing.

Just by way of example, an additional element 31 may be a latching device that may protrude out of the housing element for latching the same with a complementarily shaped element of the measuring object 11.

Furthermore, an additional element 31 may be formed by a screw, a latch, a screw nut or other appropriate elements. It should also be mentioned that the housing element 3 may be provided with more than one temperature sensor 5 and/or more than one measuring object 11 and the corresponding cavities 23 or insertion channels 9.

### REFERENCE NUMERALS

- 1: Arrangement
- 3: Housing element
- 5: Temperature sensor
- 7: Electric conductor
- 9: Insertion channel
- 11: Measuring object
- 13: Object end
- 15: Sensor end
- 17: Sheath
- 19: Filling
- 21: Cavities
- 23: Sensor cavity
- 25: Material bridge
- 27: Placeholder
- 29: Heating arrangement
- 31: Additional element
- 33: Setup
- C: Circumferential direction
- L: Longitudinal direction

## Claims

1. Housing element (3) for securing at least one temperature sensor (5) on a measuring object (5), in particular a part of an electric drive, wherein the housing element (3) is provided with at least one sensor cavity (23) for housing the temperature sensor (5) and at least one insertion channel (9) for receiving a measuring object (11) at least in parts, wherein the housing element (3) comprises a filling (19) in which the at least one sensor cavity (23) and the at least one insertion channel (9) are formed and a sheath (17) that surrounds the filling (19) at least in parts.

2. Housing element (3) according to claim 1, wherein the filling (19) forms a material bridge (25) between the at least one sensor cavity (23) and the at least one insertion channel (9).

3. Housing element (3) according to claim 1 or 2, wherein the sheath (17) extends continuously along a circumferential direction (C) of the housing element (3).

4. Housing element (3) according to any one of claims 1 to 3, wherein the filling (19) is made from a fluoropolymer material.

5. Housing element (3) according to any one of claims 1 to 4, wherein the sheath (17) is made from a heat-shrinkable material.

6. Housing element (3) according to any one of claims 1 to 5, wherein the sheath (17) is made from a fluoropolymer material.

7. Housing element (3) according to any one of claims 1 to 6, wherein the at least one sensor cavity (23) and/or the at least one insertion channel (9) have an overall longitudinal shape.

8. Housing element (3) according to any one of claims 1 to 7, wherein the at least one sensor cavity (23) and the at least one insertion channel (9) open up to opposite sides (13, 15) of the housing element (3).

9. Housing element (3) according to any one of claims 1 to 8, wherein at least one additional element (31) is embedded in the filling (19).

10. Arrangement (1) comprising a housing element (3) according to any one of claims 1 to 9 and at least one temperature sensor (5) housed in the at least one sensor cavity (23).

11. Arrangement (1) according to claim 10, the arrangement (1) further comprising at least one placeholder (27) for the measuring object (11), wherein the at least one insertion channel (23) is formed complementarily to the placeholder (27) at least in parts.

12. Setup (33) for manufacturing a housing element (3) according to any one of claims 1 to 9 or an arrangement (1) according to any one of claims 10 or 11, the setup (33) comprising at least one heating arrangement (29) for heating at least the filling (19) of the housing element (3) and at least one placeholder (27) for forming the at least one insertion channel (23).

13. Method for manufacturing a housing element (3) according to any one of claims 1 to 9 or an arrangement (1) according to any one of claims 10 to 12, wherein the housing element (3) is shaped around at least one temperature sensor (5) and around at least one placeholder (27) for a measuring object (11).

14. Method according to claim 13, wherein the at least one placeholder (27) is removed after shaping.

15. Method according to claim 13 or 14, wherein the at least one placeholder (27) is reused for manufacturing at least one further housing element (3).
